(19) Europäisches Patentamt / European Patent Office / Office européen des brevets

(11) **EP 1 542 409 B1**

(12) **EUROPEAN PATENT SPECIFICATION**

(45) Date of publication and mention
of the grant of the patent:
**15.04.2009  Bulletin 2009/16**

(51) Int Cl.:
**H04L 12/56** (2006.01)

(21) Application number: **03028292.5**

(22) Date of filing: **10.12.2003**

(54) **Protocol for multi-hop ad-hoc networks**

Protokoll für Multi-Hop Ad-Hoc-Netzwerke

Protocole de communication aux réseaux ad hoc à bonds multiple

(84) Designated Contracting States:
**AT BE BG CH CY CZ DE DK EE ES FI FR GB GR
HU IE IT LI LU MC NL PT RO SE SI SK TR**

(43) Date of publication of application:
**15.06.2005  Bulletin 2005/24**

(73) Proprietor: **Sony Deutschland GmbH
10785 Berlin (DE)**

(72) Inventor: **Hamdan, Amen
70374 Stuttgart (DE)**

(74) Representative: **Rupp, Christian et al
Mitscherlich & Partner
Patent- und Rechtsanwälte
Sonnenstraße 33
80331 München (DE)**

(56) References cited:
EP-A- 1 024 628          EP-A- 1 253 539
EP-A- 1 324 217          US-A1- 2002 187 750
US-A1- 2003 032 409      US-A1- 2003 066 090
US-A1- 2003 070 070      US-A1- 2003 179 742
US-B1- 6 604 140         US-B2- 6 640 097

• AMY LAW: "New Service Discovery Protocol"
WIRELESS NETWORKS' ARCHITECTURE AND
CPMMUNICATIONS PROTOCOLS, 2002, pages
1-15, XP002292473 INTERNET

**Description**

FIELD AND BACKGROUND OF THE INVENTION

The present invention generally relates to the field of wireless peer-to-peer networks, in particular to a service discovery protocol and a corresponding method for providing low-profile, low-overhead service discovery information needed for determining the availability of requested remote services in a wireless multi-hop ad-hoc network designed for operation in e.g. home environments and personal usage scenarios.

Due to the widespread use of new personal network-enabled mobile devices (such as MD player and camcorder) and the emergence of near-ubiquitous communication infrastructure based on wired and wireless networks, it is becoming increasingly important to allow users and applications to interact with existing services without any need for configuration or administration. The key requirement for such a mechanism is to enable new services to advertise their existence and properties and allow service users to discover and utilize the services they need. These tasks are addressed by service discovery protocols.

Service discovery protocols which enable service providers to advertise capabilities to potential clients, thereby providing to clients and service providers a means for entering into a relationship, play a key role in mobile and wireless networks. Existing protocols addressing service discovery include e.g. IETF's Service Location Protocol (SLP), Sun Microsystems' Jini, Bluetooth's Service Discovery Protocol (SDP), Salutation - a nonproprietary service discovery protocol which is currently utilized by several shipping products - and the Universal Plug and Play (UPnP) protocol promoted by Microsoft.

Finding services within a wireless multi-hop ad-hoc network is a resource-consuming task with today's state-of-the-art service discovery protocols as these protocols often apply broadcast or centralized control structures which are not applicable to the special characteristics of wireless multi-hop ad-hoc networks. Therefore, it is necessary to implement some smart, distributed networking functionality where e.g. an application uses remote resources (services) to provide some functionality towards a user.

In the following, the requirements towards a service discovery protocol to be deployed within a home- or personal-type network scenario shall be explored, and a possible protocol for that purpose shall be discussed.

For service discovery in a wireless multi-hop ad-hoc network some boundary conditions have to be taken into account. Any of these boundary conditions translates to a requirement item that needs to be covered by any service discovery protocol that has to operate within a target environment. Even though a service discovery protocol might be operable in another scenario than the one given in a target environment, it should be tailored to provide optimal operation within said scenario.

Due to the ad-hoc nature of the target environment, any service discovery protocol applied has to be operational even with a varying network topology where nodes are allowed to permanently join or leave the network. In spite of having some indications on how stable a node's network affiliation is - stationary or mobile-, its presence can not be taken for granted over a certain period of time. Hence, any service discovery protocol should operate without a single point of failure (i.e. without any central component).

In a typical multi-hop ad-hoc network sending network-wide broadcast messages is costly in terms of used resources. Furthermore, bandwidth is a scarce resource and its usage should be minimized while still allowing a high responsiveness to discovery requests. Any service discovery protocol needs to consider this by avoiding the transmission of broadcast messages and reducing the amount of background traffic.

Another problem that might probably occur in an ad-hoc networking environment refers to network partitions and rejoins. A service discovery protocol has to handle this scenario efficiently and quickly.

In e.g. a home network any configuration by the user side is to be avoided. Software can not easily be upgraded without having a mobile code. Once a system is deployed, it is assumed to be operational for a longer period of time.

As for every service discovery protocol there are some typical requirements that have to be fulfilled. For each of the following items it has to be ensured that they are working under the above-stated boundary conditions.

- Discovery of services: The very basic (and most obvious) requirement towards a service discovery protocol is to find any service of interest on the network. For some applications it is additionally required to keep an up-to-date view on the services on the network, thus demanding not only a discovery of service but also monitoring services and possibly their states. Furthermore, it should be possible to perform the query for services in a diffuse way, e.g. by finding a service by only giving an incomplete list of attributes that the service shall met.

- Consistent and simple service description: As a part of the service discovery not only communication protocols but also data formats need to be specified. These formats are needed to prevent inconsistencies and ambiguities.

- Fast setup and reaction to changes: Any service discovery protocol shall strive to provide quick responsiveness to changes in the network, i.e. a newly introduced service shall be made known as fast as possible to other nodes. Minimizing the latency will influence the perceived agility of the network (eventually by the user). This problem is especially evident in an ad-hoc environment where changes in the network topology are probably more the rule than the exception.

The problem to be solved can be very quickly described as the need to implement the required functionality as described above under the aforementioned boundary conditions.

BRIEF DESCRIPTION OF THE STATE OF THE ART

Publish/subscribe- versus request/response-type service discovery protocols: When a publish/subscribe-type discovery protocol is applied, the network registers at a certain source or channel for dedicated service discovery messages. These messages are then sent in case a service becomes available or is no longer present, respectively. In a request/response-type discovery protocol a certain service is only searched if it has explicitly been requested by a certain client. Information on service availability is not announced. Hence, monitoring the availability of services requires periodic polling of all (or some specific) services in the network. Of course, hybrid approaches (mixtures of the above two) are also conceivable.

a) Universal Plug and Play (UPnP)

Universal Plug and Play is an open network architecture developed by an industry consortium leaded by Microsoft Corporation. UPnP offers ad-hoc peer-to-peer network connectivity of different services and devices.

b) Service Location Protocol (SLP)

The Service Location Protocol (see http://www.srvloc.org/) is the service discovery protocol proposed by the IETF. It is being developed by the Srvloc Working Group and is vendor-independent. SLP is designed for TCP/IP networks and intended to become the standard in the Internet community. The current version of SLP is SLPv2. The SLP architecture is basically composed of three members: User Agents (UAs), Service Agents (SAs), and Directory Agents (DAs).

c) Salutation

The Salutation architecture is an industry consortium's solution to the service discovery and utilization problem. The architecture provides a standard method for applications, services and devices - so-called Networked Entities - to advertise their capabilities or request the desired ones. It is claimed to be processor-, operating-system and communication-protocol independent. Its key piece is the Salutation Manager (SLM). Every Networked Entity has an SLM or uses a remote SLM by means of the Remote Procedure Call (RPC) protocol. The SLM provides services and clients with a transport-independent interface (SLM-API). A Networked Entity can act as service, client or both. The different SLMs communicate among themselves using the Salutation Manager Protocol, which is based on remote procedure calls.

d) Jini

Jini is a service-oriented Java-based architecture (infrastructure and programming model) developed by Sun Microsystems. The architecture of Jini is based on the Jini Lookup Service (JLS) component. The services have to locate a JLS server - by using the discovery protocol - and then register themselves in the JLS by using a join protocol. The clients also discover a JLS and can then query it about the available services. The matching between queries and services can be made comparing Java interfaces or a list of characteristic attributes. Each service will be maintained by the JLS only for a certain period of time, i.e. for a lease period. In this way services which are not registered are eliminated from the register.

e) Bluetooth

A Bluetooth-enabled personal area network (PAN) consists of large-sized multi-hop networks in which mobile devices can communicate not only via a master node with other mobile devices located in a single piconet but also with wireless nodes which can be reached via a multiplicity of intermediate nodes. Mobile devices are thus able to communicate and use services provided by other mobile devices or infrastructure systems. To allow mobile terminals to use these services, service providers have to publish all available services together with some basic configuration information, and service users have to be equipped with means for searching these services and selecting a specific service provider.

The Bluetooth Service Discovery Protocol (SDP) thereby defines how a Bluetooth client's application shell acts to discover services offered by available Bluetooth servers and their characteristics. SDP thereby allows client applications to access services by using other discovery protocols such as SLP, Salutation, etc., but it does not need them. The protocol defines how a client terminal can search for a remote service based on specific attributes without knowing anything about the availability of said service. It provides means for discovering new services that become available when a client terminal enters an area where a Bluetooth server is operating. SDP also provides functionality for detecting when a service is no longer available.

A device containing an SDP client can search services specifying its class or some of its attributes, and it also can retrieve services without knowing its characteristics. In turn, a remote SDP server will respond to these inquiries. Devices must be aware of the availability of new services and know about the unavailability of known ones. The use of intermediary agents as caches to improve the efficiency of the system is allowed.

US 2002/0120750 A1 describes a method, a wireless network device and a computer program product for performing service discovery in a pervasive wireless local area network, e.g. in an ad-hoc Bluetooth PAN consisting of a number of multi-hop networks.

US 6,397,061 B1 refers to a method and apparatus for reprioritizing data transfer in a short-range mobile ad-hoc network (MANET) applied to a wireless communication device capable of communicating with a local wireless network within a predetermined communication range.

A communication device and a software for operating multimedia applications in at least one communication network is described in US 2001/0003191 A1.

EP 1 227 689 A1 pertains to an entry gateway server provided to support mobile devices in the discovery process of local services.

EP 1 022 876 A1 refers to a method for advertising services offerings in wireless local area networks comprising at least two mobile terminals and an apparatus for exchanging service information with other mobile terminals.

A scheme and an apparatus for distinguishing services offered by a service-providing device in adjacency of the apparatus from services offered by a service-providing device not being in the apparatus' adjacency is described in EP 1 024 628 A1.

An advanced system and method for dynamically discovering, provisioning and accessing host services on wireless data communication devices needed for sending a service book to a mobile device is described in WO 02/084975 A2.

WO 02/23826 A2 pertains to a service framework supporting service discovery and connection, in particular to an information appliance system with a user device comprising a client platform that includes a service framework to discover and connect with a variety of services, both remote and local, transient and persistent, and to disconnect from said services when they are no longer of interest or become unavailable.

WO 02/45382 A2 is directed to a method and device for providing a service record for an application (e.g. a legacy application) running on a virtual serial port of a wireless transceiver device, such as a Bluetooth-enabled device.

US 6,604,140 (Beck et al.) discloses a method, apparatus and computer product that enables one or more computing devices to discover and use services over a network, which may be ad-hoc when the computing device is mobile. Service discovery is based on periodic multi-casting of exported service descriptions to nearby devices over the (ad-hoc) network. While service descriptors are multi-cast and discovered, the service software is only downloaded on the device when the service is used.

OBJECT OF THE PRESENT INVENTION

It is the object of the present invention to propose a technology for improving peer-to-peer service discovery in wireless multi-hop ad-hoc networks.

This object is achieved by means of the features of the independent claim. Advantageous features are defined in the subordinate claims. Further objects and advantages of the invention are apparent in the detailed description which follows.

SUMMARY OF THE INVENTION

The present invention is basically dedicated to a service discovery protocol and a corresponding method for providing low-profile, low-overhead service discovery information needed for determining the availability of requested remote services in a peer-to-peer-based wireless multi-hop ad-hoc network organized according to the store-and-forward messaging principle which is designed for operation in e.g. home environments and personal usage scenarios.

According to one embodiment of the present invention, received service announcement messages are transmitted, said messages referring to remote services offered by service providers within said network. Thereby, outdated messages which are identical with old service announcement messages that have already been received by this peer are discarded, and new service announcement messages are accumulated in a local message pool assigned to said peer and sorted according to their potential relevance before being propagated to said neighboring peers. First, each service announcement message received by this peer is tagged with a relevance value. After that, relevance values of all service announcement messages stored in said local message pool are summed up, thus yielding a cumulative relevance value. Once this cumulative relevance value exceeds a predefined relevance threshold value, all service announcement messages stored in said local message pool are aggregated and sent to all neighboring peers of said peer.

BRIEF DESCRIPTION OF THE DRAWINGS

Further advantages and possible applications of the present invention result from the subordinate claims as well as from the following description of different embodiments of the present invention, accompanied by the following drawings:

Fig. 1    shows different characteristic features, advantages and disadvantages of conventional service discovery mechanisms and protocols according to the state of the art,

Fig. 2    is a diagram showing different peer protocol layers used for the handling of a metadata-based service description according to the present invention,

Fig. 3    is a first UML message sequence chart, which shows the interactions for registering a remote service according to the present invention,

Fig. 4    is a second UML message sequence chart, which shows the interactions for registering a local service according to the present invention,

Fig. 5    is a third UML message sequence chart, which shows the interactions for handling a service message indicating the availability of a remote service according to the present invention,

Fig. 6    is a fourth UML message sequence chart, which shows the interactions for deregistering a local or remote service according to the present invention,

Fig. 7    is a UML state chart illustrating the service discovery mechanism executed by the service discovery protocol 208 according to the present invention, and

Fig. 8    is a UML class diagram showing the classes for an object-oriented implementation of the service discovery protocol according to the present invention.

DETAILED DESCRIPTION OF THE PRESENT INVENTION

In case a peer requires a certain service for any of the client applications and/or services it is running, it has basically two different possibilities: proactively querying for any service which might be of interest to a user or listening to some channels for service announcements.
To find a specific service with given attributes in the network, a reactive service discovery mechanism can be executed. For this purpose, the data link control (DLC) layer already implements some low-level service discovery means. To utilize this functionality, the following three-phase approach is proposed:

1. First, a local service table is queried for a specific service of interest.

2. If locally none is available, a DLC service discovery protocol is executed.

3. Once some services of interest are known, more detailed information on them is retrieved and forwarded to the requesting peer.

To further enhance the responsiveness of the applied service discovery mechanism, not only proactive service querying but also service announcement is supported. The design target of the proposed service discovery protocol is to provide some robust and efficient service announcement means while minimizing the number of messages to be sent. Thereby, broadcast messages are avoided as they are rather costly in a wireless ad-hoc networks.
According to one embodiment of the present invention, every peer $N_i$ implements a so-called service announce-

ment message pool $P_i$. Thereby, any service announcement message $M_{ik}$ received by this peer $N_i$ is tagged with a relevance value $r_{ik}$. After that, all relevance values $r_{ik}$ in the pool are summed up, thus yielding a cumulative relevance value

$$R_i \; := \; \sum_{k=0}^{K_i-1} r_{ik} \;\; \text{with} \;\; r_{ik} \in \mathbb{N}_0, \quad (1)$$

wherein $K_i$ denotes the total number of service announcement messages $M_{ik}$ stored in said peer's pool $P_i$. Once this cumulative relevance value $R_i$ exceeds a predefined threshold value $R_{th,i}$, all messages in the pool $P_i$ are aggregated and sent to any neighboring peer $N_\ell$ ($\ell \neq i$). Said relevance values $r_{ik}$ can be very small for service announcements that are not of high importance and higher for more important ones. The speed with which messages are distributed in the network can thus be controlled in a fine-grained way.

In case the applied transmission media support one-hop broadcasting, a single service announcement message pool $P_i$ can be used for the entire neighborhood of a wireless peer $N_i$. If this is not the case or in case the message delivery should be controlled in a more fine-grained manner, another pool $P_j$ can be implemented. This allows e.g. to set the threshold values $R_{th,i}$ of pools $P_i$ assigned to mobile peers $N_i$ to a higher value than the threshold values $R_{th,j}$ of pools $P_j$ assigned to stationary peers $N_j$. It is also possible to define a non-fixed threshold value $R_{th,i}$, which means a time-variant threshold function $R_{th,i}(t)$ that can be changed according to external conditions. For example, when determining that a neighboring peer $N_\ell$ is running low on energy and/or other information concerning varying resource availability within said network and/or changing link characteristics between a peer $N_i$ and its neighboring peer $N_\ell$, the threshold value $R_{th,i}$ of the according service announcement message pool $P_i$ of peer $N_i$ is increased in order to avoid sending unnecessary messages $M_{ik}$ to the neighboring peer $N_\ell$.

While the cumulative relevance values $R_j := \sum_k r_{jk}$ on stationary peers $N_j$ must not exceed a predefined threshold value $R_{th,j}$, mobile peers $N_i$ are free to choose any value for their threshold value $R_{th,i}$. Setting this threshold value $R_{th,i}$ to "infinite" would be equal to not sending any messages at all while a value of zero would force every message $M_{ik}$ to be resent immediately.

The basic protocol for propagating service announcement messages is rather simple in order to allow an efficient execution. In principle, the following steps need to be executed by any peer participating in the service announcement procedure according to the present invention:

1. Any service announcement is done with an additional integer relevance parameter $r_{ik}$ as well as a real-valued relevance degeneration rate $d_{ik}$ between 0 and 100%.

2. If a service announcement message $M_{ik}$ has been seen before on a peer $N_i$, it is discarded. In any other case, the message is locally stored on this peer by putting it into a pool $P_i$ of received service announcement messages $M_{ik}$.

3. After that, all relevance values $r_{ik}$ assigned to service announcement messages $M_{ik}$ stored in this pool $P_i$ are added, thus yielding a cumulative relevance value $R_i := \sum_k r_{ik}$. If the cumulative relevance value $R_i$ exceeds a predefined threshold value $R_{th,i}$, the service announcement messages $M_{ik}$ are aggregated and sent to all peers in the neighborhood of said peer $N_i$. The same happens if the number $K_i$ of service announcement messages $M_{ik}$ in the pool $P_i$ exceeds a certain number threshold $K_{th,i}$ or if the time $\Delta t_{ik}$ passed since the reception of the last service announcement message $M_{ik}$ exceeds a predefined time period threshold $\Delta t_{th,i}$. These conditions can be summarized as follows:

$$\forall \, i: \; [(R_i > R_{th,i}) \; \lor \; (K_i > K_{th,i}) \; \lor \; \exists \, k: (\Delta t_{ik} > \Delta t_{th,i})]$$

$$\Rightarrow \text{Send} \; \bigcup_{k=0}^{K_i-1} M_{ik} \; \text{from} \; N_i \; \text{to all neighbors} \; N_\ell \; (\ell \neq i). \quad (2)$$

4. Any peer $N_i$ that receives a service announcement message $M_{ik}$ puts it into its local pool $P_i$. Furthermore, said peer $N_i$ recalculates the relevance value $r_{ik}$ of the incoming message by subtracting the percentage of degeneration given by the relevance degeneration rate $d_{ik}$ from the respective relevance value $r_{ik}$:

$$r_{ik}' \;:=\; r_{ik} \cdot \left(1 - \frac{d_{ik}\,[\%]}{100}\right) \; \in \; \mathfrak{R}_0^+ \quad (3)$$

for $r_{ik}' \in \mathfrak{R}_0$ and $d_{ik} \in$ [0 %, 100 %].

The degeneration of the relevance value $r_{ik}$ allows to create messages $M_{ik}$ that initially have a high relevance value $r_{ik}$ (and are thus quickly sent throughout the network) but get "less important" after some hops. Thus, service announcement messages $M_{ik}$ are quickly spread to near-by peers but only slowly propagated to peers farther away.

Every message $M_{ik}$ that is sent contains a service identifier (or service description), a message identifier and the address of the peer $N_H$ hosting the service. The message identifier is created from a peer internal counter that is incremented after a message $M_{ik}$ was tagged. Whenever a peer $N_i$ receives a new message $Mi_k$, it checks for the lastly seen message $M_{i,k-1}$ with the given service identifier from the given peer. If the stored message identifier is newer than the one of the new message $M_{ik}$, this new message is discarded.

Additionally, each available service is associated with a lease timeout before which the available service has to be re-announced. This mechanism is used to avoid old entries in the service tables.

Service availability announcements are triggered when a service which has to be made known to client terminals connected to the wireless multi-hop ad-hoc network registers itself on a local peer $N_i$. Thereby, any service availability announcement message $M_{ik}$ is not only put into the peer's service announcement message pool $P_i$ but also causes an update of the local service table.

In the same sense, the availability of a service has to be made known to other peers, whereas the loss of a service has to be propagated throughout the entire network. In principle, the reasons for announcing service loss will mainly be that a service is unregistered at a peer. The case that a peer is no longer present in the network and thus services hosted on that peer are also lost is extra handled by monitoring the availability of wireless peers. The overall process for announcing a message is the one described above.

In order to remove outdated entries from peers which are no longer present in the network, a mechanism for indicating peer loss is added to the service discovery protocol. This mechanism supports the leasing mechanism already introduced above.

Once a new neighboring peer $N_j$ becomes visible, service tables and management data of the services offered by this peer (e.g. its message counter) are requested. The returned services are checked whether they have already been handled. If this is not the case, they are added to the local message pool $P_i$ of the respective peer $N_i$. Thereby, network fluctuations are used to furthermore trigger message exchanges and to contribute to the overall availability of messages in the network. To avoid sending unnecessary messages, negotiation procedures as described below can be applied.

Since message overheads caused by said negotiation procedure should be avoided, a new peer joining said network is only allowed to clone the state of one (or some) of its neighbors.

So far we only described a pro-active service presence information dissemination. Of course, the given protocol can also be used to forward requests for services to other nodes.

Whenever the pool content is sent to anyone of a wireless peer's neighbors (or to a multiplicity of them), a short outline of the messages to be sent will be delivered. The information sent includes (at least) the service identifier, the address of the peer $N_H$ hosting the service and the message identifier. With this information any peer can decide if the message is of interest to it or not. Accordingly, there are the following options available in case peer $N_i$ offers peer $N_{i+1}$ a message $M_{ik}$:

1. In case this message $M_{ik}$ is not of interest for peer $N_{i+1}$, it can request peer $N_i$ to delete the message.

2. If said message $M_{ik}$ is possibly of interest to peer $N_{i+1}$ but $N_{i+1}$ does not yet want to receive it (i.e. because peer $N_{i+1}$ is going to initiate a sleep mode and does not process further messages), it can request peer $N_i$ to store the message for later delivery.

3. It might also be possible that peer $N_{i+1}$ has an updated message $M_{i+1,k}$ that makes the one ($M_{ik}$) of peer $N_i$ obsolete (e.g. peer $N_i$ wants to send a service announcement, but peer $N_{i+1}$ already knows that the respective service is no longer available). In this case, peer $N_{i+1}$ provides peer $N_i$ with the updated message $M_{i+1,k}$.

Within a wireless multi-hop ad-hoc network a number of services can be available at the same time. Some of them might be seen as a conglomerate service (e.g. the television control and the surround control services might be seen as one home entertainment service). In case a service user wants to find such a conglomerate service, it specifies such within a query. Decomposing the conglomerate service into particular services and discovering them within the network is then done by the service discovery protocol according to the present invention. For this purpose, a request for the conglomerate service is spread within the network, and each peer wishing to contribute to it will send back a corresponding response. These responses are collected at the requesting peer, and a check is done if the conglomerate service can be created or not.

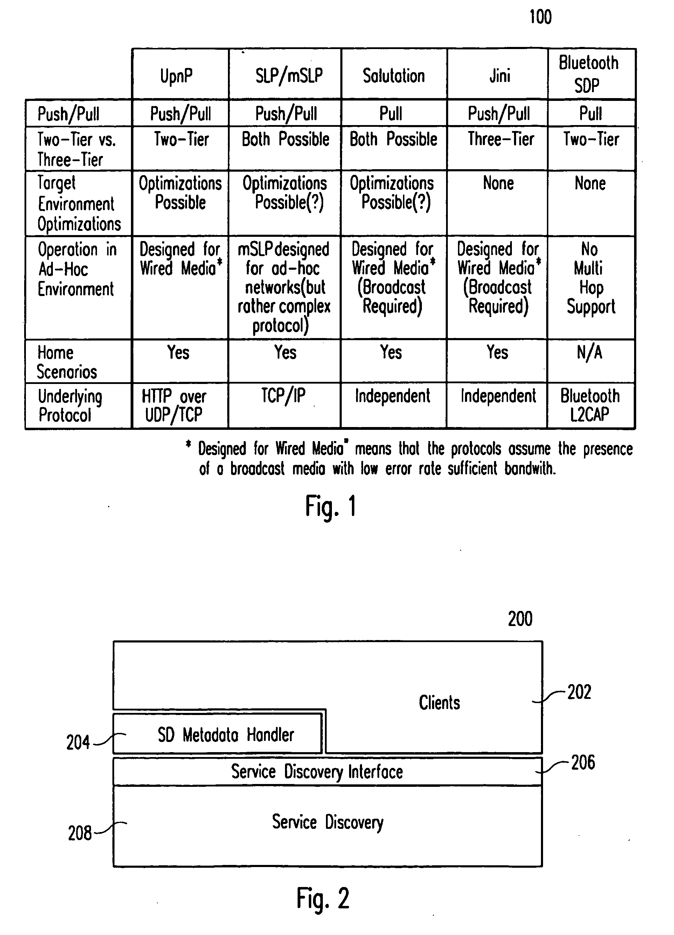

As basis for the service description only key/value pairs are supported. They allow describing a service by assigning key (attribute) values. Since only the basic service discovery mechanism is implemented by the given protocol, this information will be sufficient. In contrast to other service description languages, e.g. the one in UPnP, information like event or state description is intentionally left out to minimize overhead. To still provide such a functionality towards higher layers, an additional component is introduced: the Service Discovery (SD) Metadata Handler 204. This component can mediate between more complex higher-layer service description means, as e.g. the one of UPnP, and the proposed service discovery protocol 208 according to the present invention (see Fig. 2). For this purpose, it extracts the core service description attributes to pass them to the service discovery protocol layer. Once the service discovery protocol has found some services, it correspondingly reassembles the answer in the expected format. If required, such a meta-data handler 204 could be deployed to map various service discovery protocols to the given service discovery protocol 208.

Even though the protocol is especially designed for the purpose of service discovery, the basic communication scheme might also work well for other data such as e.g. network status information, device presence messages, event propagation or any kind of data that do not have real-time constraints in terms of data delivery. Such kind of data could be (among others): distributed routing information, distributed information to support/enable QoS provisioning, network status information, (instant) messaging data, sensor data, peer status information, etc.

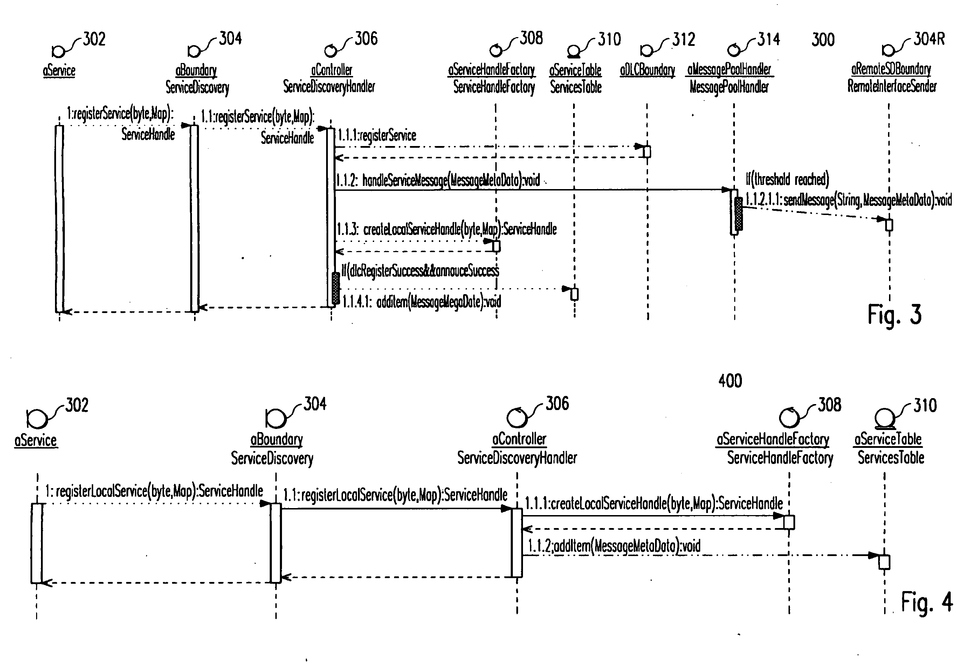

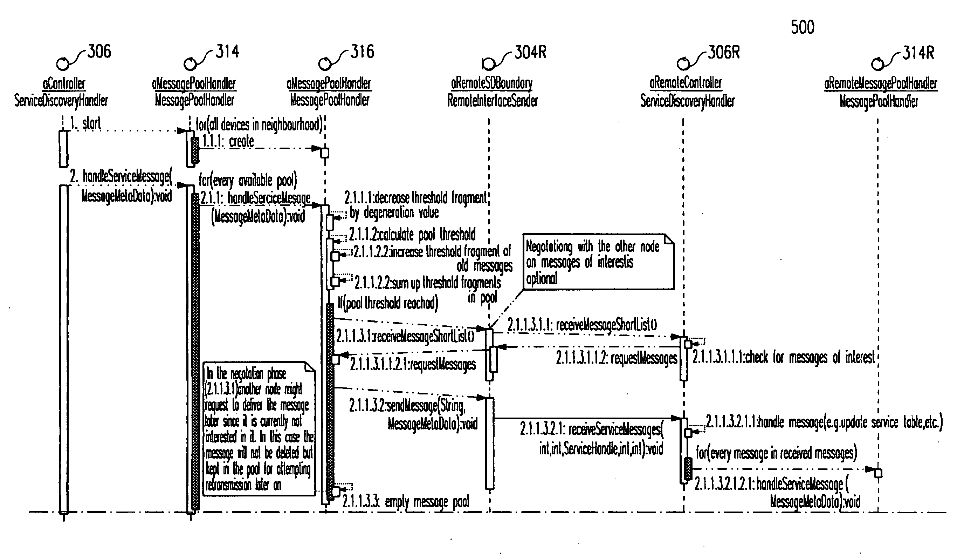

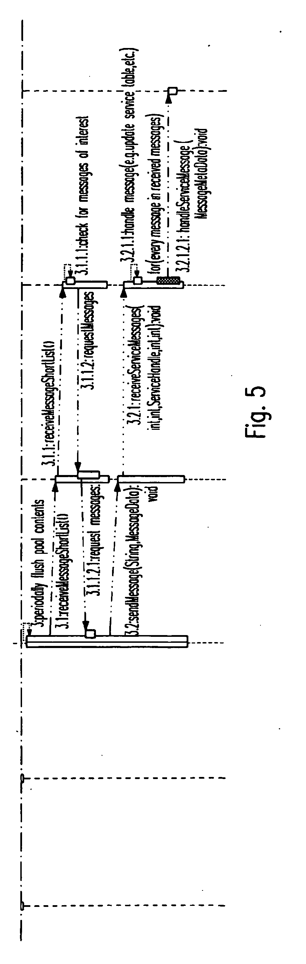

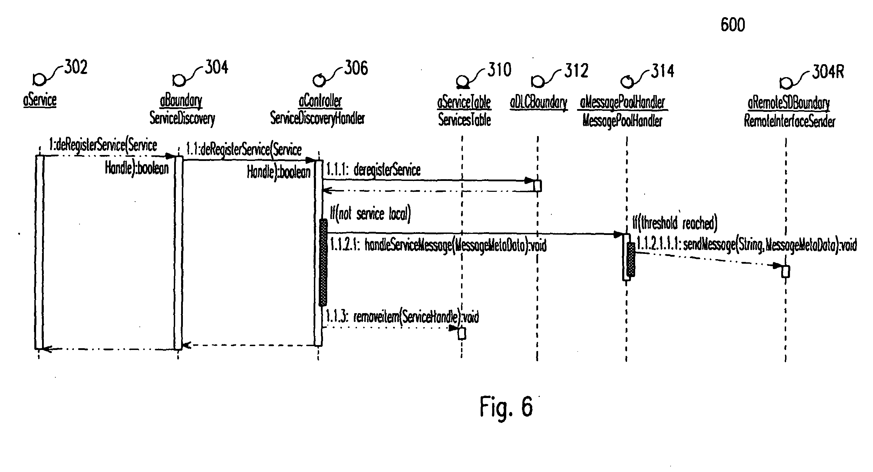

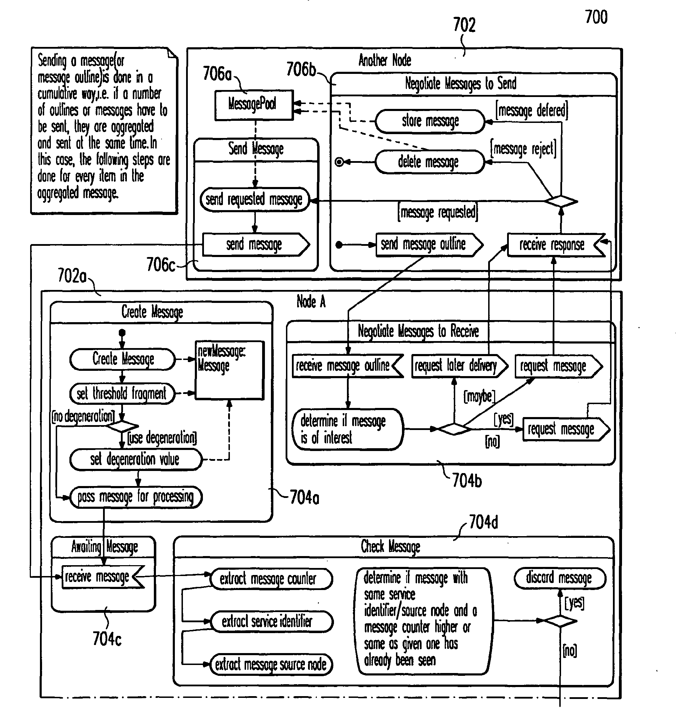

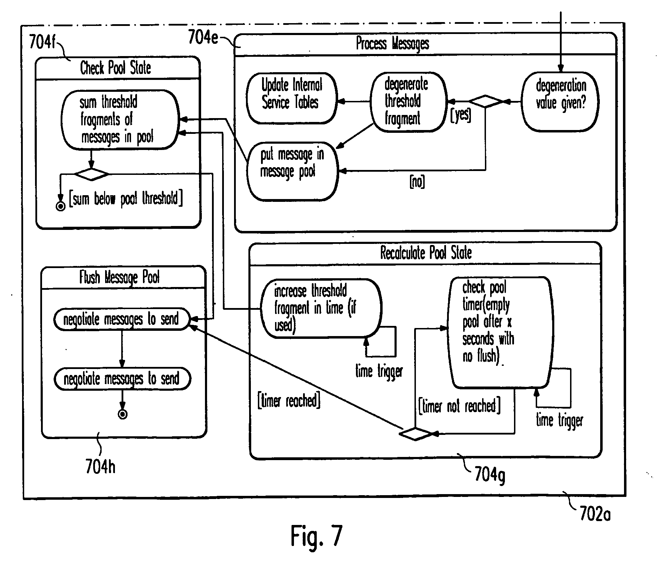

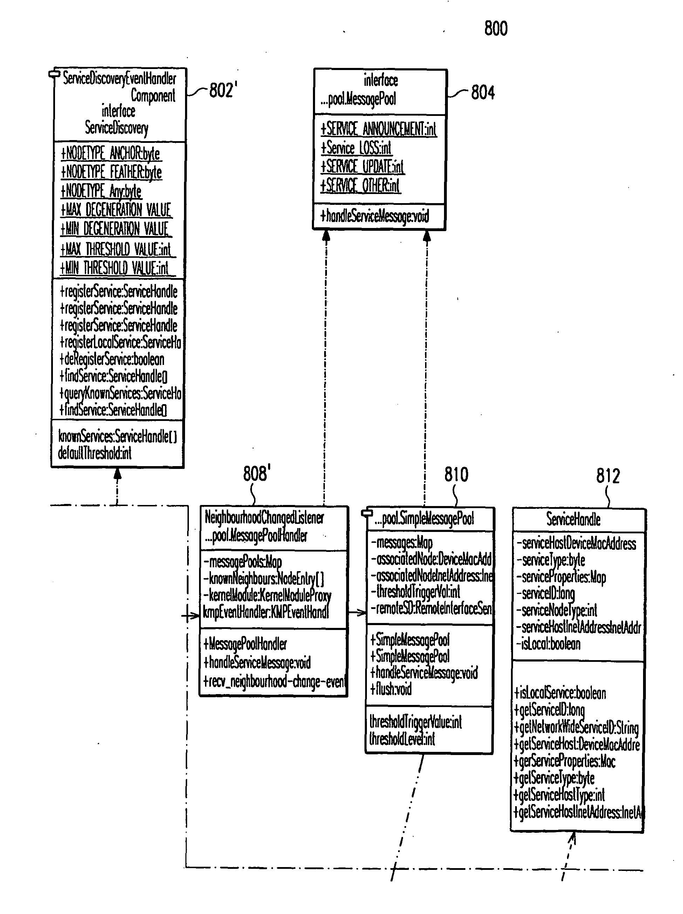

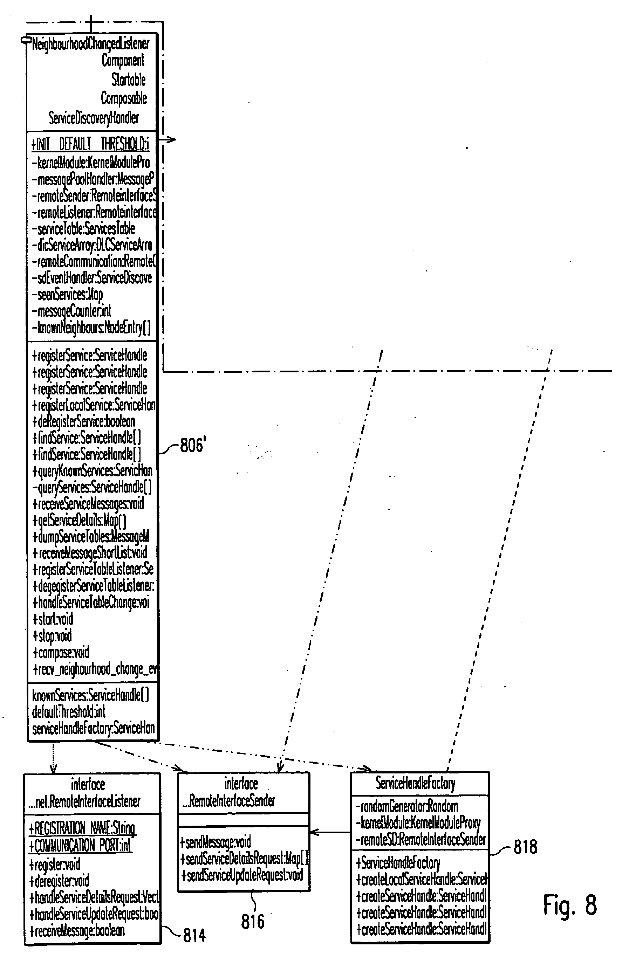

The procedures of registering a service, handling a service message indicating the availability of said service according to the present invention and deregistering the service are illustrated in the UML message sequence charts 300, 400, 500, and 600 depicted in Figs. 3 to 6. An overview of the proposed service discovery mechanism executed by the service discovery protocol 208 according to the present invention is given by the UML state chart 700 depicted in Fig. 7. Finally, a UML class diagram 800 showing the classes for an object-oriented implementation of the service discovery protocol according to the present invention is depicted in Fig. 8.

The flexibility of the proposed service discovery protocol provides some degrees of freedom, some of which will subsequently be briefly discussed:

1. Any peer $N_i$ can locally decide when and how many announcement messages its service announcement message pool $P_i$ contains. Peers with power constraints such as mobile peers $N_i$ might have some larger pools $P_i$ to avoid sending too many messages $M_{ik}$ while stationary peers $N_j$ might have small pools $P_j$, thus forcing them to send more messages $M_{ik}$. Moreover, a threshold value $R_{th,i}$ ($R_{th,j}$) for the cumulative relevance value $R_i$ ($R_j$) can be set according to the current constraints of the respective mobile ($N_i$) or stationary peer ($N_j$). The value itself can be changed dynamically by the respective peer according to its current state.

2. With the possibility to have service announcement degeneration, available services are quickly announced in the immediate neighborhood of a peer $N_i$ ($N_j$) but become only slowly visible at peers farther away.

3. Services which have to be made known to the entire network very quickly can be sent with a relatively high relevance value $r_{ik}$ ($r_{jk}$); others can be sent with a lower one. In any case, the speed of spreading a service announcement message $M_{ik}$ within the network can easily be controlled by peer $N_i$ ($N_j$).

4. Fluctuations in the number of the peers forming said mobile multi-hop ad-hoc network can be used to trigger message exchanges and thus contribute to overall information dissemination.

It should be noted that neither of the given items and especially the combination of them can already be found in conventional service discovery protocols according to the state of the art.

The proposed protocol is specially tailored to the requirements of wireless multi-hop ad-hoc networks designed for operation in e.g. home environments and personal usage scenarios and features the following characteristics:

- No broadcasting: In wireless multi-hop ad-hoc networks broadcasting is an expensive and power-consuming task (if it is possible at all). Hence, the proposed service discovery protocol can be seen as an enabling technology for service discovery in wireless multi-hop ad-hoc networks.

- Sending no unnecessary messages, thus avoiding traffic overhead and preserving energy: This is especially of interest for mobile, battery-powered peers. The proposed protocol allows building devices that are less power-consuming by offering the same (or even better) functionality compared to the state of the art.

- Keeping a very up-to-date view of the immediate neighborhood of a wireless peer (e.g. a television set located in the same room) and thus an enhanced user experience when utilizing this technology.

Utilizing functionality at lower layers and keeping the protocol rather simple allows easily integrating (at least some) functionality into hardware if required.

A further embodiment of the present invention pertains to a peer $N_i$ serving as a proxy server for providing service discovery information needed for determining the availability of requested remote services in a peer-to-peer-based wireless multi-hop ad-hoc network based on a store-and-forward messaging principle. Thereby, said peer comprises a service discovery manager unit 204 for implementing a method as described above.

### Description of the Applied Terms

| Technical Term | Brief Explanation |
|---|---|
| Service | Service is any component within a network that exposes some interface. The interface must be accessible externally, i.e. from other processes and possibly from other peers within the network. The process of exposing the services is given by the utilized service discovery protocol and its implementation. |
| Service Discovery (SD) | Service Discovery describes the process of finding suitable services within the network. A service is matching a request if it fulfills some specification as given by the instance requesting the service discovery. This service specification might only be a simple service type, but could consist of a more complex description of the desired service by e.g. a list of attributes that has to be met. Details on how services are looked up are defined by the according service discovery protocol. |
| Target Environment | Target environment is a wireless multi-hop ad-hoc network tailored for operation in e.g. home environments and for personal use. |

### Depicted Features and their Corresponding Reference Signs

| No. | Technical Feature (System Component or Procedure Step) |
|---|---|
| 100 | table comparing different characteristic features, advantages and disadvantages of conventional service discovery mechanisms and protocols |
| 200 | diagram showing different peer protocol layers used for the handling of a metadata-based service description according to the present invention |
| 202 | application layer of said peer protocol for running client applications |
| 204 | intermediate protocol layer for a service discovery meta-data handler |
| 206 | interface between the service discovery protocol layer 208 and the application layer 202 as well as the intermediate protocol layer 204 for said service discovery metadata handler |
| 208 | service discovery protocol layer for determining the availability of requested remote services |
| 300 | UML message sequence chart showing the interactions for registering a remote service according to the present invention |
| 302 | element aService |
| 304 | element aBoundary, derived from the class ServiceDiscovery 802 |
| 304R | element aRemoteSDBoundary, derived from the class RemoteInterfaceSender 816 |
| 306 | element aController, derived from the class ServiceDiscoveryHandler 806 |
| 306R | element aRemoteController, derived from the class ServiceDiscoveryHandler 806 |
| 308 | element aServiceHandleFactory, derived from the class ServiceHandleFactory 818 element aServiceTable, derived from the class ServiceTable (not shown) |

(continued)

| No. | Technical Feature (System Component or Procedure Step) |
|---|---|
| 312 | element aDLCBoundary |
| 314 | element aMessagePoolHandler, derived from the class MessagePoolHandler 808 |
| 314R | element aRemoteMessagePoolHandler, derived from the class MessagePoolHandler 808 |
| 316 | element aMessagePoolImpl, derived from the class SimpleMessagePool 810 |
| 400 | UML message sequence chart showing the interactions for registering a local service according to the present invention |
| 500 | UML message sequence chart showing the interactions for handling a service message indicating the availability of a remote service according to the present invention |
| 600 | UML message sequence chart showing the interactions for deregistering a local or remote service according to the present invention |
| 700 | UML state chart illustrating the service discovery mechanism executed by the service discovery protocol 208 according to the present invention |
| 702a | a first peer (peer A) in a wireless multi-hop ad-hoc network |
| 702b | a second peer (peer B) in said wireless multi-hop ad-hoc network |
| 704a | state "Create Message" of said first peer 702a (peer A) |
| 704b | state "Negotiate Message to Receive" of the first peer 702a (peer A) |
| 704c | state "Awaiting Message" of the first peer 702a (peer A) |
| 704d | state "Check Message" of the first peer 702a (peer A) |
| 704e | state "Process Messages" of the first peer 702a (peer A) |
| 704f | state "Check Pool State" of the first peer 702a (peer A) |
| 704g | state "Recalculate Pool State" of the first peer 702a (peer A) |
| 704h | state "Flush Message Pool" of the first peer 702a (peer A) |
| 706a | message pool of said second peer 702b (peer B) |
| 706b | state "Negotiate Messages to Send" of the second peer 702b (peer B) |
| 706c | state "Send Message" of the second peer 702b (peer B) |
| 800 | UML class diagram showing the classes for an object-oriented implementation of the service discovery protocol according to the present invention |
| 802 | class ServiceDiscovery |
| 802' | component ServiceDiscoveryEventHandler, derived from the class ServiceDiscovery 802 |
| 804 | class MessagePool, obtained by a generalization of the NeighborhoodChangedListener component 808 and the SimpleMessagePool class 810 |
| 806 | class ServiceDiscoveryHandler |
| 806' | component NeighborhoodChangedListener, derived from the class ServiceDiscoveryHandler 806 |
| 808 | class MessagePoolHandler |
| 808' | component NeighborhoodChangedListener, derived from the class MessagePoolHandler 808 |
| 810 | class SimpleMessagePool |
| 812 | class ServiceHandle |
| 814 | class RemoteInterfaceListener |
| 816 | class RemoteInterfaceSender |

(continued)

| No. | Technical Feature (System Component or Procedure Step) |
|---|---|
| 818 | class ServiceHandleFactory |
| S0 | step #0: controlling the delivery of received service announcement messages $M_{ik}$ referring to remote services offered by service providers within said network to its neighboring peers $N_\ell$ by sorting (S2') said messages $M_{ik}$ according to their potential relevance $r_{ik}$ before being propagated (S4b) to said neighboring peers $N_\ell$ and discarding (S1b) outdated and irrelevant messages $M_{ik}$ |
| S1a | step #1a: receiving said service announcement messages $M_{ik}$ |
| S1b | step #1b: discarding messages $M_{ik}$ which are identical with old service announcement messages $M_{ik}$ that have already been received by this peer $N_i$ |
| S1c | step #1c: accumulating new service announcement messages $M_{ik}$ in a local message pool $P_i$ assigned to said peer $N_i$ |
| S2 | step #2: tagging each service announcement message $M_{ik}$ received by this peer $N_i$ with a relevance value $r_{ik}$ |
| S3 | step #3: adding the relevance values $r_{ik}$ of all service announcement messages $M_{ik}$ stored in said local message pool $P_i$, thus yielding a cumulative relevance value $R_i$ |
| S4a | step #4a: once this cumulative relevance value $R_i$ exceeds a predefined relevance threshold value $R_{th,i}$, aggregating all service announcement messages $M_{ik}$ stored in said local message pool $P_i$ |
| S4b | step #4b: sending the aggregated service announcement messages $M_{ik}$ to all neighboring peers $N_\ell$ of said peer $N_i$ |
| S4b' | step #4b': sending received and aggregated service announcement messages $M_{ik}$ to all neighboring peers $N_\ell$ in case the number $K_i$ of stored service announcement messages $M_{ik}$ in the local message pool $P_i$ assigned to said first peer $N_i$ exceeds a certain number threshold $K_{th,i}$ |
| S4b" | step #4b'': sending received and aggregated service announcement messages $M_{ik}$ to all neighboring peers $N_\ell$ in case the time $\Delta t_{\iota\kappa}$ passed since the reception of the last service announcement message $M_{ik}$ exceeds a predefined time period threshold $\Delta t_{th,i}$ |
| S5 | step #5: setting the relevance threshold values $R_{th,i}$ of local message pools $P_i$ assigned to mobile peers $N_i$ to a higher value than the threshold values $R_{th,j}$ of local message pools $P_j$ assigned to stationary peers $N_j$ |
| S6 | step #6: dynamically changing said relevance threshold value $R_{th,i}$ according to external conditions |
| S6a | step #6a: determining whether a neighboring second peer $N_\ell$ is running low on energy and/or other information concerning varying resource availability within said network and/or changing link characteristics between said peers $N_i$ and $N_\ell$ |
| S6b | step #6b: if this is the case, increasing the relevance threshold value $R_{th,i}$ of the according local message pool $P_i$ of said first peer $N_i$ to avoid sending unnecessary service announcement messages $M_{ik}$ to said second peer $N_\ell$ |
| S7 | step #7: recalculating the relevance values $r_{ik}$ of received service announcement messages $M_{ik}$ by subtracting a percentage of degeneration given by a relevance degeneration rate $d_{ik}$ from the respective relevance value $r_{ik}$, said degeneration rate $d_{ik}$ being the greater the greater the number of hops a service announcement messages $M_{ik}$ has been propagated such that service announcement messages $M_{ik}$ are quickly spread to near-by peers $N_\ell$ but only slowly propagated to peers $N_\ell$ farther away from the first peer $N_i$ |
| S8a | step #8a: monitoring the availability of neighboring peers $N_\ell$ within said network |
| S8b | step #8b: in case a peer $N_\ell$ is no longer present in the network and thus services hosted on that peer $N_\ell$ are lost, propagating the loss of these service throughout the entire network |

(continued)

| No. | Technical Feature (System Component or Procedure Step) |
|---|---|
| S9 | step #9: in case the content of the local message pool $P_i$ assigned to said first peer $N_i$ is sent to anyone of its neighboring peers $N_\ell$ or to a multiplicity of them, supplying said neighboring peers $N_\ell$ with a short outline of service announcement messages $M_{ik}$ to be propagated, said outline including at least a service identifier, the address of a peer $N_H$ hosting the service and a message identifier, such that a neighboring peer $N_\ell$ receiving these data can decide whether said message $M_{ik}$ is of particular interest to it or not |
| S10a | step #10a: proactively querying a local service table containing information on the availability of specific services of interest from a peer $N_H$ hosting these services |
| S10b | step #10b: in case locally none is available, executing a service discovery protocol for providing service discovery information needed for determining the availability of the requested services within said multi-hop ad-hoc network |
| S10c | step #10c: once some services of interest are known, retrieving more detailed information on these services |
| S10d | step #10d: forwarding this information to all neighboring peers $N_\ell$ |

**Claims**

1. A method for providing service discovery information for determining the availability of remote services in a peer-to-peer-based wireless multi-hop ad-hoc network comprising a plurality of peers, wherein
said method comprises the steps of delivering received service announcement messages ($M_{ik}$) referring to remote services offered by service providers within said network to neighbouring peers ($N_1$) and discarding (S1b) outdated and irrelevant messages ($M_{ik}$),
wherein
one peer ($N_i$) of the network executes the following steps:

receiving (S1a) service announcement messages ($M_{ik}$) referring to remote services offered by service providers within said network,
discarding (S1b) messages ($M_{ik}$) which are identical with old service announcement messages ($M_{ik}$) that have already been received by this peer ($N_i$) and accumulating (S1c) new service announcement messages ($M_{ik}$) in a local message pool ($P_i$) assigned to said peer ($N_i$)

**characterized in that** the method further comprises the steps of:

tagging (S2) each service announcement message ($M_{ik}$) with a relevance value ($r_{ik}$),
adding (S3) the relevance values ($r_{ik}$) of all service announcement messages ($M_{ik}$) stored in said local message pool ($P_i$), thus yielding a cumulative relevance value ($R_i$), and,
once this cumulative relevance value ($R_i$) exceeds a predefined relevance threshold value ($R_{th,i}$), aggregating (S4a) all service announcement messages ($M_{ik}$) stored in said local message pool ($P_i$) and sending (S4b) them to all neighboring peers ($N_1$) of said peer ($N_i$).

2. A method according to claim 1,
**characterized by** the step of
setting (S5) the relevance threshold values ($R_{th,i}$) of local message pools ($P_i$) assigned to mobile peers ($N_i$) to a higher value than the threshold values ($R_{th,j}$) of local message pools ($P_j$) assigned to stationary peers ($N_j$).

3. A method according to claim 2,
**characterized by** the step of
dynamically changing (S6) said relevance threshold value ($R_{th,i}$) according to external conditions.

4. A method according to claim 3,
**characterized in that** a first peer ($N_i$) announcing available services within said network executes the steps of

- determining (S6a) whether a neighboring second peer ($N_i$) is running low on energy and/or other information concerning varying resource availability within said network and/or changing link characteristics between said peers ($N_i$,$N_1$) and,
- if this is the case, increasing (S6b) the relevance threshold value ($R_{th,i}$) of the according local message pool ($P_i$) of said first peer ($N_i$) to avoid sending unnecessary service announcement messages ($M_{ik}$) to said second peer ($N_l$).

5. A method according to claim 4,
**characterized by** said first peer ($N_i$) executing the step of sending (S4b') received and aggregated service announcement messages ($M_{ik}$) to all neighboring peers ($N_l$) in case the number ($K_i$) of stored service announcement messages ($M_{ik}$) in the local message pool ($P_i$) assigned to said first peer ($N_i$) exceeds a certain number threshold ($K_{th,i}$).

6. A method according to claim 4,
**characterized by** said first peer ($N_i$) executing the step of sending (S4b") received and aggregated service announcement messages ($M_{ik}$) to all neighboring peers ($N_l$) in case the time ($\Delta t_{ik}$) passed since the reception of the last service announcement message ($M_{ik}$) exceeds a predefined time period threshold ($\Delta t_{th,i}$).

7. A method according to anyone of the preceding claims,
**characterized by** said first peer ($N_i$) executing the step of recalculating (S7) the relevance values ($r_{ik}$) of received service announcement messages ($M_{ik}$) by subtracting a percentage of degeneration given by a relevance degeneration rate ($d_{ik}$) from the respective relevance value ($r_{ik}$, said degeneration rate ($d_{ik}$) being the greater the number of hops a service announcement messages ($M_{ik}$) has been propagated such that service announcement messages ($M_{ik}$) are quickly spread to near-by peers ($N_1$) but only slowly propagated to peers ($N_1$) farther away from said first peer ($N_i$).

8. A method according to anyone of the preceding claims,
**characterized in that** said first peer ($N_i$),
in case the content of the local message pool ($P_i$) assigned to said first peer ($N_i$) is sent to anyone of its neighboring peers ($N_l$) or to a multiplicity of them, supplies (S9) said neighboring peers ($N_1$) with a short outline of service announcement messages ($M_{ik}$) to be propagated, said outline including at least a service identifier, the address of a peer ($N_H$) hosting the service and a message identifier, such that a neighboring peer ($N_1$) receiving these data can decide whether said message ($M_{ik}$) is of particular interest to it or not.

## Patentansprüche

1. Verfahren zum Bereitstellen von Dienstfeststellungsinformation zum Bestimmen der Verfügbarkeit von Femdiensten in einem drahtlosen Partner-Partner-Multi-Hop Ad-Hoc-Netzwerk, welches mehrere Partner umfasst, wobei das Verfahren folgende Schritte umfasst:

Liefern empfangener Dienstankündigungsnachrichten ($M_{ik}$), welche sich auf Ferndienste beziehen, welche durch Dienstanbieter innerhalb des Netzwerks angeboten werden, zu Nachbar-Partnern ($N_1$), und Löschen (S1b) veralteter und irrelevanter Nachrichten ($M_{ik}$),

wobei ein Partner ($N_i$) des Netzwerks die folgenden Schritte ausführt:

Empfangen (S1a) von Dienstankündigungsnachrichten ($M_{ik}$), die sich auf Ferndienste beziehen, welche durch Dienstanbieter innerhalb des Netzwerks angeboten werden, Löschen (S1b) von Nachrichten ($M_{ik}$), welche mit alten Dienstankündigungsnachrichten ($M_{ik}$) identisch sind, welche durch diesen Partner ($N_i$) schon empfangen wurden, und Sammeln (S1c) neuer Dienstankündigungsnachrichten ($M_{ik}$) in einem örtlichen Nachrichtenpool ($P_i$), der diesem Partner ($N_i$) zugeteilt ist,

**dadurch gekennzeichnet, dass** das Verfahren außerdem folgende Schritte umfasst:

Kennzeichnen (S2) jeder Dienstankündigungsnachricht ($M_{ik}$) mit einem Relevanzwert ($r_{ik}$),
Hinzufügen (S3) der Relevanzwerte ($r_{ik}$) aller Dienstankündigungsnachrichten ($M_{ik}$), welche im örtlichen Nachrichtenpool ($P_i$) gespeichert sind, um somit einen kumulativen Relevanzwert ($R_{i'}$) zu liefern, und

wenn dieser kumulative Relevanzwert ($R_i$) einmal einen vorher festgelegten Relevanzschwellenwert ($R_{th, i}$) übersteigt, Anhäufen (S4a) aller Dienstankündigungsnachrichten ($M_{ik}$), welche im örtlichen Nachrichtenpool ($P_i$) gespeichert sind, und deren Senden (S4b) zu allen benachbarten Partnern ($N_1$) des Partners ($N_i$).

2. Verfahren nach Anspruch 1,
**gekennzeichnet durch** folgenden Schritt:

Setzen (S5) der Relevanzschwellenwerte ($R_{th, i}$) der örtlichen Nachrichtenpools ($P_i$), welche mobilen Partnern ($N_i$) zugeordnet sind, auf einen höheren Wert als die Schwellenwerte ($R_{th,j}$) der örtlichen Nachrichtenpools ($P_j$), welche stationären Partnern ($N_j$) zugeteilt sind.

3. Verfahren nach Anspruch 2,
**gekennzeichnet durch** folgenden Schritt:

dynamisches Ändern (S6) des Relevanzschwellenwerts ($R_{th, i}$) gemäß externen Zuständen.

4. Verfahren nach Anspruch 3,
**dadurch gekennzeichnet, dass** ein erster Partner ($N_i$), der verfügbar Dienste innerhalb des Netzwerks ankündigt, folgende Schritte ausführt:

- Bestimmen (S6a), ob ein benachbarter zweiter Partner ($N_i$) bei Energie- und/oder von anderer Information schlecht läuft, welche das Variieren von Ressourcenverfiigbarkeit innerhalb des Netzwerks betrifft und/oder Ändern von Verknüpfungskenndaten zwischen den Partnern ($N_i$, $N_l$), und,
- wenn dies der Fall ist, Erhöhen (S6b) des Relevanzschwellenwerts ($R_{th,i}$) des entsprechenden örtlichen Nachrichtenpools ($P_i$) des ersten Partners ($N_i$), um das Senden nichtnotwendiger Dienstankündigungsnachrichten ($M_{ik}$) zum zweiten Partner ($N_1$) zu vermeiden.

5. Verfahren nach Anspruch 4,
**dadurch gekennzeichnet, dass** der erste Partner ($N_i$) den Schritt zum Senden (S4b') empfangener und angehäufter Dienstankündigungsnachrichten ($M_{ik}$) zu allen benachbarten Partnern ($N_1$) ausführt, wenn die Anzahl ($K_i$) gespeicherter Dienstankündigungsnachrichten ($M_{ik}$) im örtlichen Nachrichtenpool ($P_i$), welche dem ersten Partner ($N_i$) zugeordnet ist, einen bestimmten Zahlenschwellenwert ($K_{th,i}$) übersteigt.

6. Verfahren nach Anspruch 4,
**dadurch gekennzeichnet, dass** der erste Partner ($N_i$) den Schritt zum Senden (S4b") empfangener und angehäufter Dienstankündigungsnachrichten zu allen benachbarten Partnern ($N_l$) ausführt, wenn die Zeit ($\Delta t_{ik}$) welche seit dem Empfang der letzten Dienstankündigungsnachricht ($M_{ik}$) verstrichen ist, einen vorgegebenen Zeitperioden-Schwellenwert ($\Delta t_{th,i}$) übersteigt.

7. Verfahren nach einem der vorhergehenden Ansprüche,
**dadurch gekennzeichnet, dass** der erste Partner ($N_i$) den Schritt zum Neuberechnen (S7) der Relevanzwerte ($r_{ik}$) empfangener Dienstankündigungsnachrichten ($M_{ik}$) durchführt, wobei ein Prozentsatz der Degeneration, der durch eine Relevanzdegenrationsrate ($d_{ik}$) angegeben wird, vom entsprechenden Relevanzwert ($r_{ik}$) subtrahiert wird, wobei die Degenerationsrate ($d_{ik}$) umso größer ist, wie die Anzahl von Sprüngen von Dienstankündigungsnachrichten ($M_{ik}$) sich verbreitet hat, so dass Dienstankündigungsnachrichten ($M_{ik}$) schnell auf benachbarte Partner ($N_1$) verbreitet werden, jedoch langsam auf Partner ($N_l$) verbreitet werden, welche weiter weg vom ersten Partner ($N_i$) sind.

8. Verfahren nach einem der vorhergehenden Ansprüche,
**dadurch gekennzeichnet, dass** der erste Partner ($N_i$), wenn der Inhalt des örtlichen Nachrichtenpools ($P_i$), der dem ersten Partner ($N_i$) zugeteilt ist, zu irgendeinem von dessen benachbarten Partnern ($N_1$) oder zu einer Vielzahl von diesen gesendet wird, die benachbarten Partner ($N_1$) mit einer kurzen Übersicht von Dienstankündigungsnachrichten ($M_{ik}$), die zu verbreiten sind, beliefert, wobei die Übersicht zumindest einen Dienstidentifizierer, die Adresse eines Partners ($N_H$), die den Dienst- und einen Nachrichtenidentifizierer beherbergt, aufweist, so dass ein benachbarter Partner ($N_l$), der diese Daten empfängt, entscheiden kann, ob die Nachricht ($M_{ik}$) für ihn von bestimmtem Interesse ist oder nicht.

**Revendications**

1. Procédé de délivrance d'une information pour déterminer la disponibilité de services à distance dans un réseau ad hoc à bonds multiples sans fil d'utilisateur à utilisateur comportant une pluralité d'utilisateurs, dans lequel ledit procédé comporte les étapes consistant à

   délivrer des messages d'annonce de service reçus ($M_{ik}$) se référant à des services à distance offerts par des fournisseurs de services à l'intérieur dudit réseau à des utilisateurs voisins ($N_1$) et
   rejeter (S1b) des messages périmés et non pertinents ($M_{ik}$),
   dans lequel un utilisateur ($N_i$) du réseau exécute les étapes suivantes :

   recevoir (S1a) des messages d'annonce de service ($M_{ik}$) se référant à des services à distance offerts par des fournisseurs de services à l'intérieur dudit réseau,
   rejeter (S1b) des messages ($M_{ik}$) qui sont identiques à d'anciens messages d'annonce de service ($M_{ik}$) qui ont déjà été reçus par cet utilisateur ($N_i$)
   et accumuler (S1c) de nouveaux messages d'annonce de service ($M_{ik}$) dans un pool de message local ($P_i$) assigné audit utilisateur ($N_i$),

   **caractérisé en ce que** le procédé comporte en outre les étapes consistant à :

   référencer chaque message d'annonce de service ($M_{ik}$) avec une valeur de pertinence ($r_{ik}$) ,
   ajouter (S3) les valeurs de pertinence ($r_{ik}$) de tous les messages d'annonce de service ($M_{ik}$) mémorisés dans ledit pool de messages local ($P_i$), produisant ainsi une valeur de pertinence cumulative ($R_i$), et,
   une fois que cette valeur de pertinence cumulative ($R_i$) dépasse une valeur de seuil de pertinence prédéfinie ($R_{th,i}$, regrouper (S4a) tous les messages d'annonce de service ($M_{ik}$) mémorisés dans ledit pool de message local ($P_i$) et les envoyer (S4b) à tous les utilisateurs voisins ($N_1$) dudit utilisateur ($N_i$).

2. Procédé selon la revendication 1, **caractérisé par** l'étape consistant à
   fixer (S5) les valeurs de seuil de pertinence ($R_{th,i}$) des pools de messages locaux ($P_i$) assignés aux utilisateurs mobiles ($N_i$) à une valeur plus élevée que les valeurs de seuil ($R_{th,j}$) des pools de messages locaux ($P_j$) assignés aux utilisateurs fixes ($N_j$).

3. Procédé selon la revendication 2, **caractérisé par** l'étape consistant à
   changer dynamiquement (S6) ladite valeur de seuil de pertinence ($R_{th,i}$) selon les conditions externes.

4. Procédé selon la revendication 3, **caractérisé en ce qu'**un premier utilisateur ($N_i$) annonçant des services disponibles à l'intérieur dudit réseau exécute les étapes consistant à
   déterminer (S6a) si un second utilisateur voisin ($N_1$) fonctionne avec une énergie faible et/ou une autre information concernant la variation de disponibilité de ressources à l'intérieur dudit réseau et/ou changer des caractéristiques de liaison entre lesdits utilisateurs ($N_i$, $N_l$), et
   si c'est le cas, augmenter (S6b) la valeur de seuil de pertinence ($R_{th,i}$) du pool de message local correspondant ($P_i$) dudit premier utilisateur ($N_i$) pour empêcher l'envoi de messages d'annonce de service inutiles ($M_{ik}$) audit second utilisateur.

5. Procédé selon la revendication 4, **caractérisé par** ledit premier utilisateur ($N_i$) exécutant l'étape d'envoi (S4b') de messages d'annonce de service reçus et groupés ($M_{ik}$) à tous les utilisateurs voisins ($N_1$) dans le cas où le nombre ($K_i$) de messages d'annonce de service mémorisés ($M_{ik}$) dans le pool de message local ($P_i$) assigné audit premier utilisateur ($N_i$) dépasse un certain seuil de nombre ($K_{th,i}$).

6. Procédé selon la revendication 4, **caractérisé par** ledit premier utilisateur ($N_i$) exécutant l'étape d'envoi (S4b") de messages d'annonce de service reçus et groupés ($M_{ik}$) à tous les utilisateurs voisins ($N_i$) au cas où le temps ($\Delta t_{ik}$) écoulé depuis la réception du dernier message d'annonce de service ($M_{ik}$) dépasse un seuil de période de temps prédéterminé ($\Delta t_{th,i}$) -

7. Procédé selon l'une quelconque des revendications précédentes, **caractérisé par** ledit premier utilisateur ($N_i$) exécutant l'étape de recalcul (S7) des valeurs de pertinence ($r_{ik}$) des messages d'annonce de service reçus ($M_{ik}$) en retranchant un pourcentage de dégénération donné par un taux de dégénération de pertinence ($d_{ik}$) à partir de la valeur de pertinence respective ($r_{ik}$), ledit taux de dégénération ($d_{ik}$) étant le plus grand nombre de bonds que des messages d'annonce de service ($M_{ik}$) ont effectué de sorte que des messages d'annonce de services ($M_{ik}$)

sont rapidement étendus aux utilisateurs proches ($N_i$) mais seulement propagés lentement aux utilisateurs ($N_i$) éloignés dudit premier utilisateur.

8. Procédé selon l'une quelconque des revendications précédentes, **caractérisé en ce que** ledit premier utilisateur ($N_l$), dans le cas où le contenu du pool de message local ($P_i$) assigné audit premier utilisateur ($N_i$) est envoyé à l'un quelconque de ses utilisateurs voisins ($N_1$) ou à une pluralité d'entre eux, délivre (S9) auxdits utilisateurs voisins ($N_l$) un bref résumé des messages d'annonce de service ($M_{ik}$) à propager, ledit résumé comprenant au moins un identificateur de service, l'adresse d'un utilisateur ($N_H$) hébergeant le service et un identificateur de message, de sorte qu'un utilisateur voisin ($N_1$) recevant ces données peut décider si ledit message ($M_{ik}$) est d'un intérêt particulier pour lui ou non.

EP 1 542 409 B1

100

|  | UpnP | SLP/mSLP | Salutation | Jini | Bluetooth SDP |
|---|---|---|---|---|---|
| Push/Pull | Push/Pull | Push/Pull | Pull | Push/Pull | Pull |
| Two-Tier vs. Three-Tier | Two-Tier | Both Possible | Both Possible | Three-Tier | Two-Tier |
| Target Environment Optimizations | Optimizations Possible | Optimizations Possible(?) | Optimizations Possible(?) | None | None |
| Operation in Ad-Hoc Environment | Designed for Wired Media* | mSLP designed for ad-hoc networks(but rather complex protocol) | Designed for Wired Media* (Broadcast Required) | Designed for Wired Media* (Broadcast Required) | No Multi Hop Support |
| Home Scenarios | Yes | Yes | Yes | Yes | N/A |
| Underlying Protocol | HTTP over UDP/TCP | TCP/IP | Independent | Independent | Bluetooth L2CAP |

* Designed for Wired Media* means that the protocols assume the presence of a broadcast media with low error rate sufficient bandwith.

## Fig. 1

200

Clients — 202

SD Metadata Handler — 204

Service Discovery Interface — 206

Service Discovery — 208

## Fig. 2

Fig. 3

Fig. 4

EP 1 542 409 B1

*306* aController ServiceDiscoveryHandler

*314* aMessagePoolHandler MessagePoolHandler

*316* aMessagePoolHandler MessagePoolHandler

*304R* aRemoteSDBoundary RemoteInterfaceSender

*306R* aRemoteController ServiceDiscoveryHandler

*314R* aRemoteMessagePoolHandler MessagePoolHandler

500

1. start

for(all devices in neighbourhood)

1.1.1: create

2. handleServiceMessage( MessageMetaData):void

for(every available pool)

2.1.1: handleSerciceMesage (MessageMetaData):void

2.1.1.1:decrease threshold fragment by degeneration value

2.1.1.2:calculate pool threshold

2.1.1.2.2:increase threshold fragment of old messages

2.1.1.2.2:sum up threshold fragments in pool

if(pool threshold reached)

Negotationg with the other node on messages of interestis optional

2.1.1.3.1.1: receiveMessageShortList()

2.1.1.3.1:receiveMessageShortList()

2.1.1.3.1.1.1:check for messages of interest

2.1.1.3.1.1.2.1:requestMessages

2.1.1.3.1.1.2: requestMessages

In the negotation phase (2.1.1.3.1)another node might request to deliver the message later since it is currently not interested in it. In this case the message will not be deleted but kept in the pool for attempting retransmission later on

2.1.1.3.2:sendMessage(String, MessageMetaData):void

2.1.1.3.2.1: receiveServiceMessages( int,int,ServiceHandle,int,int):void

2.1.1.3.2.1.1:handle message(e.g.update service table,etc.)

for(every message in received messages)

2.1.1.3.2.1.2.1: handleServiceMessage ( MessageMetaData):void

2.1.1.3.3: empty message pool

EP 1 542 409 B1

Fig. 5

Fig. 6

EP 1 542 409 B1

EP 1 542 409 B1

Sending a message(or message outline)is done in a cumulative way,i.e. if a number of outlines or messages have to be sent, they are aggregated and sent at the same time. In this case, the following steps are done for every item in the aggregated message.

700

702

**Another Node**

706a — MessagePool

706b

**Negotiate Messages to Send**

store message ← [message defered]

delete message ← [message reject]

[message requested]

**Send Message**

send requested message

706c — send message

send message outline

receive response

702a

**Node A**

**Create Message**

Create Message → newMessage: Message

set threshold fragment

[no degeneration]

[use degeneration]

set degeneration value

pass message for processing

704a

**Negotiate Messages to Receive**

receive message outline

request later delivery

request message

[maybe]

determine if message is of interest

[yes]

[no]

request message

704b

**Awaiting Message**

receive message

704c

704d

**Check Message**

extract message counter

extract service identifier

extract message source node

determine if message with same service identifier/source node and a message counter higher or same as given one has already been seen

discard message

[yes]

[no]

22

**704f**

**704e**

**Process Messages**

**Check Pool State**

sum threshold fragments of messages in pool

[sum below pool threshold]

Update Internal Service Tables

degenerate threshold fragment

[yes]

degeneration value given?

put message in message pool

[no]

**Recalculate Pool State**

**Flush Message Pool**

negotiate messages to send

negotiate messages to send

increase threshold fragment in time (if used)

time trigger

[timer reached]

check pool timer(empty pool after x seconds with no flush)

[timer not reached]

time trigger

**704h**

**704g**

**702a**

Fig. 7

800

**ServiceDiscoveryEventHandler**
Component
interface
ServiceDiscovery

~802'

+NODETYPE_ANCHOR:byte
+NODETYPE_FEATHER:byte
+NODETYPE_Any:byte
+MAX_DEGENERATION_VALUE
+MIN_DEGENERATION_VALUE
+MAX_THRESHOLD_VALUE:int
+MIN_THRESHOLD_VALUE:int

+registerService:ServiceHandle
+registerService:ServiceHandle
+registerService:ServiceHandle
+registerLocalService:ServiceHa
+deRegisterService:boolean
+findService:ServiceHandle()
+queryKnownServices:ServiceHa
+findService:ServiceHandle()

knownServices:ServiceHandle[]
defaultThreshold:int

---

interface
...pool.MessagePool

~804

+SERVICE_ANNOUNCEMENT:int
+Service_LOSS:int
+SERVICE_UPDATE:int
+SERVICE_OTHER:int

+handleServiceMessage:void

---

808'

**NeighbourhoodChangedListener**
...pool.MessagePoolHandler

-messagePools:Map
-knownNeighbours:NodeEntry[]
-kernelModule:KernelModuleProxy
kmpEventHandler:KMPEventHandl

+MessagePoolHandler
+handleServiceMessage:void
+recv_neighbourhood-change-event

---

810

...pool.SimpleMessagePool

-messages:Map
-associatedNode:DeviceMacAdd
-associatedNodeInetAddress:Ine
-thresholdTriggerVal:int
-remoteSD:RemoteInterfaceSen

+SimpleMessagePool
+SimpleMessagePool
+handleServiceMessage:void
+flush:void

thresholdTriggerValue:int
thresholdLevel:int

---

812

**ServiceHandle**

-serviceHostDeviceMacAddress
-serviceType:byte
-serviceProperties:Map
-serviceID:long
-serviceNodeType:int
-serviceHostInetAddress:InetAddr
-isLocal:boolean

+isLocalService:boolean
+getServiceID:long
+getNetworkWideServiceID:String
+getServiceHost:DeviceMacAddre
+gerServiceProperties:Mac
+getServiceType:byte
+getServiceHostType:int
+getServiceHostInetAddress:InetA

EP 1 542 409 B1

Fig. 8

Interface class box (806'):

NeighbourhoodChangedListener
Component
Startable
Composable
ServiceDiscoveryHandler

+INIT_DEFAULT_THRESHOLD:i
-kernelModule:KernelModulePro
-messagePoolHandler:MessageP
-remoteSender:RemoteInterfaceS
-remoteListener:RemoteInterface
-serviceTable:ServicesTable
-dlcServiceArray:DLCServiceArra
-remoteCommunication:RemoteC
-sdEventHandler:ServiceDiscove
-seenServices:Map
-messageCounter:int
-knownNeighbours:NodeEntry[]

+registerService:ServiceHandle
+registerService:ServiceHandle
+registerService:ServiceHandle
+registerLocalService:ServiceHan
+deRegisterService:boolean
+findService:ServiceHandle[]
+findService:ServiceHandle[]
+queryKnownServices:ServicHan
-queryServices:ServiceHandle[]
+receiveServiceMessages:void
+getServiceDetails:Map[]
+dumpServiceTables:MessageM
+receiveMessageShortList:void
+registerServiceTableListener:Se
+degegisterServiceTableListener:
+handleServiceTableChange:voi
+start:void
+stop:void
+compose:void
+recv_neighourhood_change_ev

knownServices:ServiceHandle[]
defaultThreshold:int
serviceHandleFactory:ServiceHan

interface (814)
...net.RemoteInterfaceListener

+REGISTRATION_NAME:String
+COMMUNICATION_PORT:int
+register:void
+deregister:void
+handleServiceDetailsRequest:Vect
+handleServiceUpdateRequest:boo
+receiveMessage:boolean

interface (816)
...RemoteInterfaceSender

+sendMessage:void
+sendServiceDetailsRequest:Map[]
+sendServiceUpdateRequest:void

ServiceHandleFactory (818)

-randomGenerator:Random
-kernelModule:KernelModuleProxy
-remoteSD:RemoteInterfaceSender

+ServiceHandleFactory
+createLocalServiceHandle:ServiceH
+createServiceHandle:ServiceHandl
+createServiceHandle:ServiceHandl
+createServiceHandle:ServiceHandl

25

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020120750 A1
- US 6397061 B1
- US 20010003191 A1
- EP 1227689 A1
- EP 1022876 A1
- EP 1024628 A1
- WO 02084975 A2
- WO 0223826 A2
- WO 0245382 A2
- US 6604140 B, Beck